# EUROPEAN PATENT APPLICATION

(11) **EP 3 444 694 A1**
(43) Date of publication of application: **20.02.2019**
(21) Application number: 17781954.7
(22) Date of filing: 14.04.2017
(51) Int. Cl.: G05D 1/02, G01C 21/00

(54) **AUTOMATIC WORKING SYSTEM, MOBILE DEVICE, AND CONTROL METHOD THEREFOR**

(30) Priority: 15.04.2016 CN 201610236064; 22.04.2016 CN 201610255304; 03.06.2016 CN 201610388792
(71) Applicant: Positec Power Tools (Suzhou) Co., Ltd, Suzhou, Jiangsu 215123 (CN)
(72) Inventor: WONG, Ka tat kelvin, Suzhou Jiangsu 215123 (CN); ZHOU, Chang, Suzhou Jiangsu 215123 (CN); LIU, Fangshi, Suzhou Jiangsu 215123 (CN); SUN, Gen, Suzhou Jiangsu 215123 (CN)
(74) Representative: Dentons UK and Middle East LLP
(86) International application number: PCT/CN2017/080625
(87) International publication number: WO 2017/177978

(57) **Abstract**

The present invention relates to an automatic working system, and the automatic working system includes a moving device and a navigation device. The automatic working system obtains boundary information of a working area; the moving device moves and works in the working area; the navigation device is detachably connected to the moving device; and the navigation device is configured to receive a location signal to determine position information of the navigation device or the connected moving device. The present invention has the beneficial effects that the navigation device is universal and can be connected with different moving devices, thereby reducing costs of a single moving device, and for an automatic working system including at least two moving devices, reducing overall costs of the automatic working system.

## Description

### BACKGROUND

### Technical Field

The present invention relates to an automatic working system, a moving device and a control method thereof.

### Related Art

Intelligent devices, for example, self-moving devices such as autonomous mowers, and autonomous snowplows, are extremely popular since appearing in the market. To make intelligent devices more intelligent, and serve users better, higher requirements are proposed on navigation functions of the intelligent devices by market. To improve a navigation function of an intelligent device, and improve location precision of the intelligent device, one method is to adopt a high precision navigation module, for example, a differential GPS navigation module. Location precision using a differential GPS location method in an RTK technology can reach a centimeter level. However, a problem that intelligent device manufacturers all face is that a high precision navigation module has high costs. If each intelligent device is configured with a high precision navigation module, costs of the intelligent device would be greatly increased. Consequently, a user cannot enjoy an attractive price of an intelligent device while high precision navigation is implemented in the intelligent device.

### SUMMARY

To overcome defects in the prior art, the present invention needs to resolve a problem by providing a navigation device that can be universally used on different intelligent devices. The navigation device includes a movable first navigation apparatus, and the first navigation apparatus is detachably connected to the intelligent device. The first navigation apparatus can connect with different intelligent devices, and cooperate with the different intelligent devices for working according to requirements in working scenarios, to provide location information for the intelligent devices. The first navigation apparatus is standardized on structure and electrical connection. Correspondingly, an intelligent device connected with the first navigation apparatus also has a standard connecting structure and electrical design. The first navigation apparatus cooperates with the intelligent devices on program, and functional modules coordinate with each other for working, so that a flexible automatic working system is formed by the navigation apparatus and the different intelligent devices. In the system, maximum utilization of the navigation apparatus can be achieved, so that costs of the entire automatic working system are reduced.

The technical solution of the present invention to solve the existing technical problem is as follows:
An automatic working system, comprising a moving device and a navigation device, wherein the automatic working system obtains boundary information of a working area; the moving device moves and works in the working area;the navigation device is detachably connected to the moving device; and the navigation device is configured to receive a location signal to determine position information of the navigation device or the connected moving device.

In an embodiment, the navigation device is capable of selectively connecting to at least one of two moving devices.

In an embodiment, the moving device is embedded with authorization information matching the navigation device, and the navigation device is capable of determining whether to match the moving device according to the authorization information.

In an embodiment, the automatic working system has an operation interface on which authorization information is entered, and the navigation device is configured to match the moving device after correct authorization information is entered.

In an embodiment, the navigation device is capable of storing authorization information of successful matching and performs, when connected to the moving device again, automatic matching based on the authorization information.

In an embodiment, the operation interface is configured to enter lock information, and the lock information locks at least some functions of the navigation device.

In an embodiment, when the navigation device is not connected to the moving device, the navigation device moves along a boundary of the working area and obtains, according to the location signal, the boundary information of the working area.

In an embodiment, multiple pieces of coordinate data generated according to the location signal by the navigation device defines the boundary information of the working area.

In an embodiment, the boundary information is stored in the navigation device or a cloud, and the moving device reads the boundary information when working in the working area.

In an embodiment, the moving device comprises a detection and control module, wherein the detection and control module detects whether stored coordinate data overlaps current coordinate data of the moving device, and when the stored coordinate data overlaps the current coordinate data of the moving device, control the moving device to move within the boundary, the current coordinate data of the moving device being generated by the navigation device connecting to the moving device according to the location signal.

In an embodiment, the navigation device further comprises a power supply, wherein the power supply supplies power to at least one of the navigation device and the moving device.

In an embodiment, the automatic working system comprises a base station of which position information is known, wherein the base station is capable of obtaining a location error of the location signal according to location information and the known position information, and transferring the location error to the navigation device.

In an embodiment, the base station is configured to be a charging station of at least one of the moving device and the navigation device.

In an embodiment, the automatic working system generates warning information when the moving device moves away from the working area.

In an embodiment, the location signal is at least one of a satellite location signal, a base station location signal, a Bluetooth location signal, and a WiFi location signal.

In an embodiment, a method for controlling an automatic working system, comprising the following steps: a. obtaining, by the automatic working system, boundary information of a working area; and b. moving and working, by a moving device in an automatic working system, in the working area, wherein the automatic working system further comprises a navigation device capable of detachably connecting to the moving device, and the moving device performs location by using the navigation device connecting to the moving device and works in the working area according to location information.

In an embodiment, the navigation device autonomously moves along the working area and obtains, according to a location signal, the boundary information.

In an embodiment, multiple pieces of coordinate data generated according to the location signal by the navigation device defines the boundary information of the working area.

The present invention further provides a navigation apparatus. A navigation apparatus, the navigation apparatus is detachably mounted to a self-moving robot or an intelligent power tool, and is configured to record, in a disassembled state, boundary information of a working area of the self-moving robot or the intelligent power tool. The navigation apparatus includes:
a recording module, configured to record coordinate data of the navigation apparatus when the navigation apparatus moves in accordance with a preset boundary;
a storage module, configured to store the coordinate data recorded by the recording module; and
a sending module, configured to send out the coordinate data stored by the storage module.

The navigation apparatus may be freely disassembled from or mounted to the self-moving robot or the intelligent power tool. When a boundary within which the self-moving robot or the intelligent power tool works needs to be generated, it is only needed that the navigation apparatus is disassembled from the self-moving robot or the intelligent power tool, and the boundary can be simply generated by using the navigation apparatus, effectively facilitating generation of the boundary.

In an embodiment, an interface module is further included, and is configured to fixedly mount the navigation apparatus to the self-moving robot or the intelligent power tool.

In an embodiment, the interface module is a socket or a slot.

In an embodiment, the recording module is a DGPS recording module, a GPS recording module or a BeiDou recording module.

In an embodiment, the coordinate data is consecutive or non-consecutive coordinate data.

In an embodiment, the sending module is a wireless or wired sending module.

In an embodiment, the navigation apparatus further includes a battery, and the battery is configured to supply a power source to the navigation apparatus.

The present invention further provides a navigation device, which includes a trolley and the navigation apparatus as described above mounted on the trolley.

According to the navigation device, after the navigation apparatus is mounted to the trolley, coordinate data of a boundary can be generated when the trolley is pushed to move along the preset boundary, effectively facilitating generation of the boundary.

In an embodiment, the trolley includes at least a scroll wheel.

A self-moving robot is provided, including the foregoing navigation apparatus, and further including:
a receiving module, configured to establish a connection to the sending module to receive the coordinate data sent by the sending module.

The self-moving robot is mounted with a navigation apparatus that can be freely disassembled. When a boundary within which the self-moving robot works needs to be generated, it is only needed that the navigation apparatus is disassembled from the self-moving robot, and the boundary can be simply generated by using the navigation apparatus, effectively facilitating generation of the boundary.

In an embodiment, the coordinate data sent by the sending module includes coordinate data of the boundary stored by the storage module and coordinate data that is of the self-moving robot and that is recorded by the recording module when the self-moving robot moves.

In an embodiment, a memory is further included, and is configured to store the coordinate data received by the receiving module.

In an embodiment, a detection and control module is further included, and is configured to: detect whether the coordinate data of the boundary stored in the memory overlaps the coordinate data of the self-moving robot stored in the memory, and when the coordinate data overlaps, control the self-moving robot to move within the boundary.

In an embodiment, the detection and control module includes:
a detection unit, configured to detect whether the coordinate data of the boundary stored in the memory overlaps the coordinate data of the self-moving robot stored in the memory; and
a movement control unit, configured to: when the coordinate data of the boundary stored in the memory overlaps the coordinate data of the self-moving robot stored in the memory, control the self-moving robot to move within the boundary.

In addition, the present invention further provides a docking method for an automatic moving device, the automatic moving device moves in a prescribed area, the prescribed area is provided with a docking apparatus, the docking apparatus is provided with a transmit module that can transmit a signal wave to limit a docking area in which the automatic moving device is docked with the docking apparatus, and the docking method includes:
obtaining a position coordinate of the automatic moving device, and obtaining an offset angle between the automatic moving device and the docking apparatus in a horizontal direction according to the position coordinate of the automatic moving device;
controlling, according to the offset angle, the automatic moving device to move to the docking apparatus, and detecting in real time whether the automatic moving device moves into the docking area; and
if the automatic moving device moves into the docking area, controlling the automatic moving device to dock with the docking apparatus.

According to the foregoing docking method for the automatic moving device, the automatic moving device can be directly moved to the docking apparatus when being docked with the docking apparatus, avoiding a conventional case in which the automatic moving device can return the docking apparatus only along a boundary, thereby reducing return duration and saving resources.

In an embodiment, when the automatic moving device is controlled to move to the docking apparatus according to the offset angle, if the automatic moving device identifies an obstacle, the automatic moving device is controlled to shift by a preset angle in the horizontal direction to avoid the obstacle for moving. When a quantity of times for which the automatic moving device identifies obstacles reaches a predetermined quantity or an absolute value of a difference between an angle between the automatic moving device and the horizontal direction and the offset angle is greater than a preset difference, the position coordinate of the automatic moving device is re-obtained and the offset angle between the automatic moving device and the docking apparatus in the horizontal direction is re-obtained according to the position coordinate of the automatic moving device.

In an embodiment, before the step of controlling the automatic moving device to dock with the docking apparatus, the method further includes:
obtaining a position image of the docking apparatus;
analyzing a positional relationship between the automatic moving device and the docking apparatus according to the position image; and
corresponding the automatic moving device to the docking apparatus according to the positional relationship.

In an embodiment, the transmit module is an ultrasonic wave transmit module.

In addition, the present invention further provides an automatic moving device, the automatic moving device moves in a prescribed area, the prescribed area is provided with a docking apparatus, the docking apparatus is provided with a transmit module that can transmit a signal wave to limit a docking area in which the automatic moving device is docked with the docking apparatus, and the automatic moving device is characterized by including:
a coordinate obtaining module, configured to obtain a position coordinate of the docking apparatus and a position coordinate of the automatic moving device;
an offset obtaining module, configured to obtain an offset angle between the automatic moving device and the docking apparatus in a horizontal direction according to the position coordinate of the docking apparatus and the position coordinate of the automatic moving device;
a control detection module, configured to control the automatic moving device to move to the docking apparatus according to the offset angle, and detect in real time whether the automatic moving device moves into the docking area; and
a docking module, configured to control the automatic moving device to dock with the docking apparatus when the automatic moving device moves into the docking area.

The automatic moving device can be directly moved to the docking apparatus when being docked with the docking apparatus, avoiding a conventional case in which the automatic moving device can return the docking apparatus only along a boundary, thereby reducing return duration and saving resources.

In an embodiment, the coordinate obtaining module is a GPS or a BeiDou navigation location module.

In an embodiment, the offset obtaining module is an electronic compass.

In an embodiment, the control and detection module includes:
an offset unit, configured to: when the automatic moving device moves to the docking apparatus according to the offset angle, if the automatic moving device identifies an obstacle, control the automatic moving device to shift by a preset angle in the horizontal direction to avoid the obstacle for moving;
a re-obtaining unit, configured to: when a quantity of times for which the automatic moving device identifies obstacles reaches a predetermined quantity or an absolute value of a difference between an angle between the automatic moving device and the horizontal direction and the offset angle is greater than a preset difference, re-obtain a position coordinate of the automatic moving device and re-obtain the offset angle between the automatic moving device and the docking apparatus in the horizontal direction according to the position coordinate of the automatic moving device; and
a detection unit, configured to detect in real time whether the automatic moving device moves into the docking area.

In an embodiment, the following modules are further included:
a camera module, configured to obtain a position image of the docking apparatus;
an analysis module, configured to analyze a positional relationship between the automatic moving device and the docking apparatus according to the position image; and
an adjustment module, configured to correspond the automatic moving device to the docking apparatus according to the positional relationship.

Compared with the prior art, the present invention has the beneficial effects that the navigation device is universal and can be connected with different moving devices, thereby reducing costs of a single moving device, and for an automatic working system including at least two moving devices, reducing overall costs of the automatic working system.

### BRIEF DESCRIPTION OF THE DRAWINGS

The objectives, technical solutions, and beneficial effects of the present invention described above can be achieved by using the following accompanying drawings.
FIG. 1 is a schematic diagram of an automatic working system according to a first embodiment of the present invention;
FIG. 2 is a schematic diagram of a conventional manner for generating a boundary;
FIG. 3 is a schematic diagram of another conventional manner for generating a boundary;
FIG. 4 is a schematic diagram of a navigation apparatus according to an embodiment;
FIG. 5 is a schematic structural diagram of a navigation apparatus according to an embodiment;
FIG. 6 is a schematic diagram of performing location by adopting the navigation apparatus in FIG. 4;
FIG. 7 is a schematic diagram when a self-moving device moves according to an embodiment;
FIG. 8 is a schematic structural diagram of a navigation apparatus according to another embodiment of the present invention;
FIG. 9 is a schematic diagram of a working area of a self-moving device according to the first embodiment of the present invention;
FIG. 10 is a schematic diagram of cooperating between a navigation device and the self-moving device according to a first embodiment of the present invention;
FIG. 11 is a schematic flowchart of a docking method for a self-moving device according to an embodiment;
FIG. 12 is a schematic flowchart of a docking method for a self-moving device according to another embodiment;
FIG. 13 is a schematic diagram of corresponding a self-moving device to a docking apparatus;
FIG. 14 is a schematic structural diagram of a self-moving device according to an embodiment;
FIG. 15 is a schematic structural diagram of a control and detection module in FIG. 4;
FIG. 16 is a schematic structural diagram of a self-moving device according to another embodiment;
FIG. 17 is a schematic diagram of cooperating between a navigation device and a self-moving device according to another embodiment of the present invention;
FIG. 18 is a schematic diagram of cooperating between a navigation device and a self-moving device according to a second embodiment of the present invention;
FIG. 19 is a schematic diagram of cooperating between a navigation device and a self-moving device according to a third embodiment of the present invention;
FIG. 20 is a schematic diagram of cooperating between a navigation device and a self-moving device according to a fourth embodiment of the present invention;
FIG. 21 is a schematic diagram of cooperating between a navigation device and a self-moving device according to a fifth embodiment of the present invention;
FIG. 22 is a schematic diagram of cooperating between a navigation device and a self-moving device according to a sixth embodiment of the present invention;
FIG. 23 is a schematic diagram of cooperating between a navigation device and a self-moving device according to a seventh embodiment of the present invention;
FIG. 24 is a schematic diagram of interfaces of a navigation apparatus and a self-moving device according to another embodiment of the present invention; and
FIG. 25 is a step diagram of cooperating between a navigation device and a self-moving device according to another embodiment of the present invention.

### DETAILED DESCRIPTION

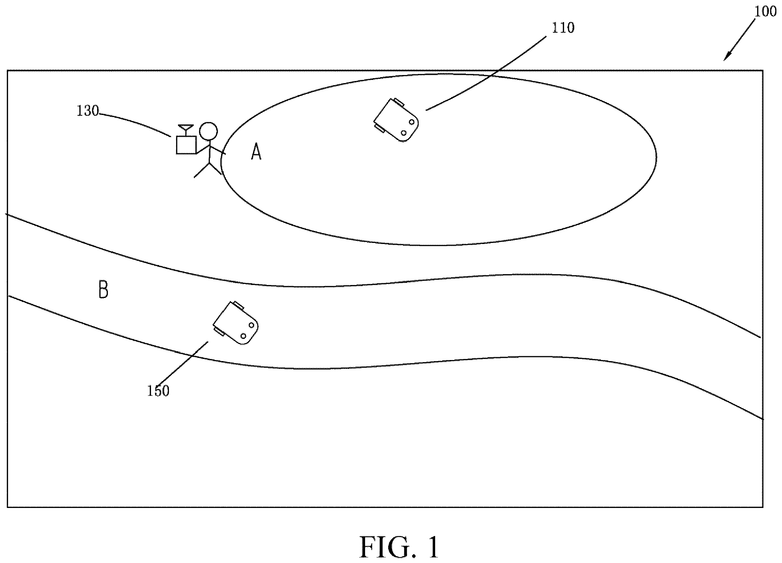

FIG. 1 is a schematic diagram of an automatic working system 100 according to a first embodiment of the present invention. The automatic working system 100 includes at least one intelligent device and navigation device. The intelligent device includes self-moving devices, for example, devices such as an autonomous mower, an autonomous snowplow, an autonomous leaf collection device, and an autonomous watering device that are suitable to be unattended. The intelligent device further includes devices that are carried and moved by users, including a smart chain saw, a smart pruning shears, and the like. The intelligent device further includes fixedly set devices, for example, a smart valve or sprinkler head that are connected to a water pipe. Usually, the intelligent device has a self-control function. A self-moving device is used as an example in all the following embodiments. A structure or control method of the self-moving device is similarly applicable to another intelligent device.

In this embodiment, the automatic working system 100 includes at least two self-moving devices. Different self-moving devices may perform a same task, or different tasks. Specifically, in this embodiment, the automatic working system 100 includes an autonomous mower 110. The autonomous mower 110 moves in a working area A and performs a lawn-mowing task, where the working area A is a lawn. In this embodiment, the automatic working system 100 further includes an autonomous snowplow 150. The autonomous snowplow 150 moves in a working area B and performs a snow-sweeping task, where the working area B is a road. Certainly, the automatic working system 100 may further include another type of self-moving device. Working areas of different self-moving devices may be the same, or partially overlap, or be irrelevant to each other.

In this embodiment, the navigation device may cooperate with different self-moving devices, to provide location information for movement of the self-moving devices. A location signal may be one or more of a satellite location signal, a base station location signal, a Bluetooth location signal, and a WiFi location signal, and can be selected according to an application scenario in practice. In the present invention, the satellite location signal is selected. Specifically, the navigation device includes a movable navigation apparatus 130. When cooperating with the self-moving device, the navigation apparatus 130 is mounted to the self-moving device and electrically connected to the self-moving device through a connecting interface, and moves with the self-moving device.

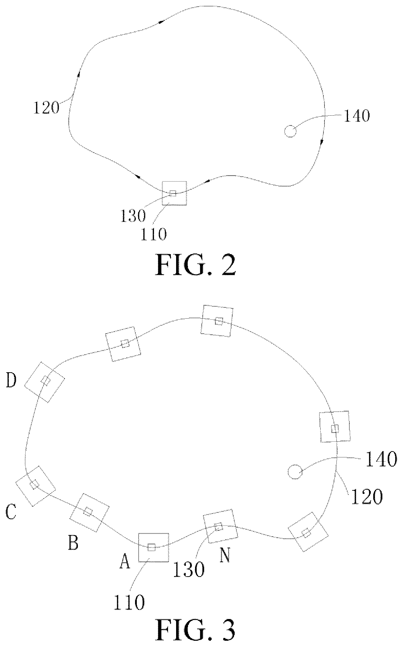

When a boundary of a self-moving robot or an intelligent power tool is generated, an autonomous mower is used as an example. As shown in FIG. 2, when a boundary 120 of the autonomous mower 110 is generated, the autonomous mower 110 usually may be manually controlled to move along the boundary 120. The autonomous mower 110 is mounted with a navigation apparatus 130 that is integrated with the autonomous mower, and the navigation apparatus 130 is usually not detachable. The navigation apparatus 130 receives a location signal from a base station 140, and may obtain consecutive coordinate points of the autonomous mower 110 when the autonomous mower 110 moves along the boundary 120. The coordinate points are connected to each other to form the boundary 120. Because the navigation apparatus 130 is not detachable, to obtain coordinate points of the boundary 120, the autonomous mower 110 and the navigation apparatus 130 should be simultaneously moved to obtain the coordinate points of the boundary 120. However, a technical problem that the autonomous mower is relatively heavy and relatively large, inflexible when moving, and difficult to be manipulated obviously exists.

To this end, a conventional method for simply obtaining coordinate points of the boundary 120 is shown in FIG. 3. The autonomous mower 110 is controlled to move along the boundary 120 through a total of N consecutive coordinate points: A, B, C, D, and the like, and the N coordinate points are connected to form a boundary. However, such a method still has the technical problem that the autonomous mower is relatively heavy and relatively large, inflexible when moving, and difficult to be manipulated. In addition, the boundary formed by connecting the N coordinate points easily causes incompletion of the boundary.

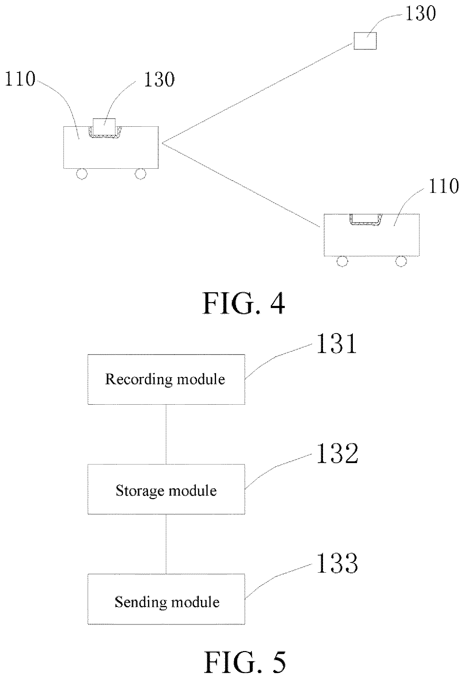

To solve the foregoing technical problem, as shown in FIG. 4, this embodiment provides a navigation apparatus 130, and the navigation apparatus 130 is disassembled from an autonomous mower 110. In addition, the navigation apparatus 130 may alternatively be re-mounted to the autonomous mower 110. That is, the navigation apparatus 130 is detachably mounted to the autonomous mower 110. Based on this embodiment, coordinate points of a preset boundary 120 can be obtained by only using the navigation apparatus 130, to generate the boundary.

As shown in FIG. 5, the navigation apparatus 130 includes a recording module 131, a storage module 132 and a sending module 133.

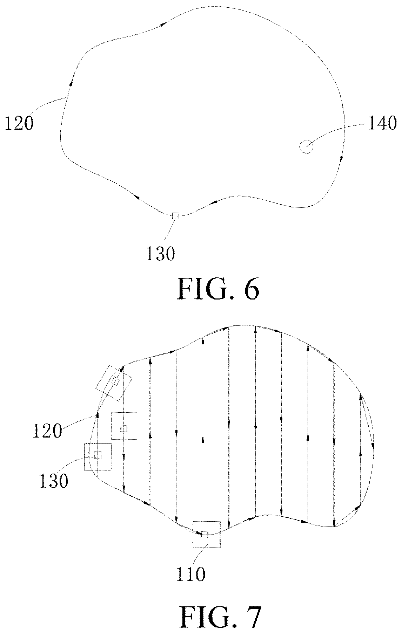

The recording module 131 is configured to record coordinate data of the navigation apparatus 130 generated when the navigation apparatus 130 moves in accordance with the preset boundary 120. As shown in FIG. 6, the navigation apparatus 130 that is disassembled from the autonomous mower 110 has a small volume and a light weight, and can be easily manually carried and moved. Therefore, the navigation apparatus 130 can be manually carried and moved along the preset boundary 120, to obtain coordinate points of the boundary 120. The coordinate points are consecutive or non-consecutive coordinate points, and a line formed by connecting these coordinate points is the final boundary of the autonomous mower, that is, coordinate data defines boundary information.

The storage module 132 is configured to store the coordinate data recorded by the recording module. Coordinate points obtained by the recording module 131 need to be stored in time. Therefore, the navigation apparatus 130 needs to be provided with the storage module 132, to prevent data from being lost.

The sending module 133 is configured to send out the coordinate data stored by the storage module. The sending module 133 can send out the coordinate data of the boundary 120 in time, for example, sending to the autonomous mower. Certainly, the coordinate data (the boundary information) can alternatively be transmitted to a cloud for storage through the sending module 133, and can be directly downloaded or extracted from the cloud when to be used. The sending module 133 may be a wireless sending module, or may be a wired sending module that can be connected to a transmit data interface (including a USB interface, and the like) of the autonomous mower.

The navigation apparatus can be freely disassembled from or mounted to the autonomous mower. When a boundary within which the autonomous mower works needs to be generated, it is only needed that the navigation apparatus is disassembled from the autonomous mower, and the boundary can be simply generated by using the navigation apparatus, effectively facilitating generation of the boundary.

Because the navigation apparatus 130 can be freely disassembled from or mounted to the autonomous mower, when mounted to the autonomous mower, to ensure stability of a connection, the navigation apparatus 130 may be provided with an interface module, and the interface module is configured to fixedly mount the navigation apparatus to the autonomous mower. The interface module may be a socket or a slot, and can be mounted to the autonomous mower.

The recording module 131 may be a DGPS recording module, a GPS recording module, a BeiDou recording module or a differential BeiDou recording module. Preferably, to ensure record precision, the DGPS recording module or the differential BeiDou recording module can be adopted.

For convenience of supplying power, the navigation apparatus 130 further includes a battery, and the battery is configured to supply a power source to the navigation apparatus. The battery may be independently charged, or may be charged by using an intelligent mower when the navigation apparatus 130 is mounted to the inside of the intelligent mower.

The present invention further provides a navigation device, which includes a trolley and the navigation apparatus as described above mounted on the trolley.

According to the navigation device, after the navigation apparatus is mounted to the trolley, coordinate data of the boundary can be generated when the trolley is pushed to move along the boundary, effectively facilitating generation of the boundary.

The trolley includes at least a scroll wheel.

This embodiment further provides a self-moving robot, which includes the navigation apparatus 130, and further includes:
a receiving module, configured to establish a connection to the sending module 133 to receive the coordinate data sent by the sending module 133. The receiving module may be a wireless receiving apparatus, or may be a wired receiving module corresponding to the sending module 133.

The self-moving robot is mounted with a navigation apparatus that can be freely disassembled. When a boundary within which the self-moving robot works needs to be generated, it is only needed that the navigation apparatus is disassembled from the self-moving robot, and the boundary can be simply generated by using the navigation apparatus, effectively facilitating generation of the boundary.

In this embodiment, the self-moving robot further includes a memory, and the memory is configured to store the coordinate data received by the receiving module.

The intelligent mower 110 is used as a self-moving robot in all the following descriptions in this embodiment.

Usually, the storage module 132 in the navigation apparatus 130 already stores coordinate data of a boundary 120 when the navigation apparatus 130 is mounted to the intelligent mower 110. As the data is already stored, after the navigation apparatus 130 is mounted to the intelligent mower 110, the receiving module can directly store the coordinate data of the boundary 120 read by the sending module 133 from the storage module 132 into the memory in the intelligent mower 110, making it convenient for the intelligent mower 110 to identify the boundary 120.

As shown in FIG. 7, after the navigation apparatus 130 is mounted to the intelligent mower 110, the intelligent mower 110 can move within the boundary 120 that is already determined by the navigation apparatus 130. When the intelligent mower moves, the recording module 131 of the navigation apparatus 130 can record in real time position coordinate data of the intelligent mower, the sending module 133 can send in real time the position coordinate data of the intelligent mower to the receiving module of the intelligent mower, and the receiving module can send in time the position coordinate data of the intelligent mower to the memory of the intelligent mower for storage.

When the intelligent mower moves, it needs to be detected in real time whether the intelligent mower moves within the boundary 120. To this end, the intelligent mower further includes a detection and control module, and the detection and control module is configured to: detect whether the coordinate data of the boundary stored in the memory overlaps the coordinate data of the intelligent mower stored in the memory, and when the coordinate data overlaps, control the intelligent mower to move within the boundary. When the coordinate data of the intelligent mower overlaps the coordinate data of the boundary, it indicates that the intelligent mower already or almost crosses the boundary, and a movement direction of the intelligent mower needs to be controlled in time. To this end, the detection and control module includes a detection unit and a movement control unit. The detection unit is configured to detect whether the coordinate data of the boundary stored in the memory overlaps the coordinate data of the intelligent mower stored in the memory; and the movement control unit is configured to: when the coordinate data of the boundary stored in the memory overlaps the coordinate data of the intelligent mower stored in the memory, control the intelligent mower to move within the boundary.

In this embodiment, the navigation device includes two working modes. In a first working mode, the navigation device works independent to the self-moving device. Specifically, as described above, the navigation apparatus 130 is controlled by a user, to move along the boundary 120 of the working area for a circle, to obtain position information of the boundary. In a second working mode, the navigation device selectively cooperates with one of multiple self-moving devices (such as the autonomous mower 110, or the autonomous snowplow 150), to provide boundary information and location information for the self-moving devices. Certainly, the automatic working system 100 may alternatively directly obtain the already uploaded boundary information from the cloud.

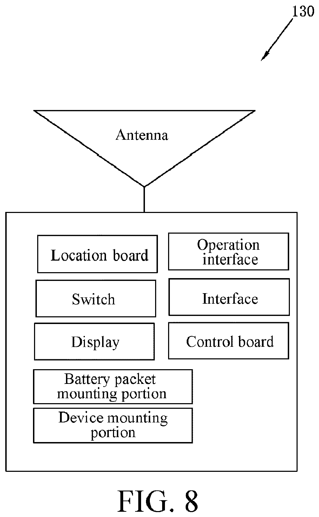

Referring to FIG. 8, in this embodiment, the navigation apparatus 130 further includes: a housing; an antenna, mounted to the top of the housing, and configured to receive a satellite location signal; a location board, mounted inside the housing, and configured to: process the satellite location signal received by an antenna, and output a position coordinate of the navigation apparatus 130; a switch, configured to control the navigation apparatus 130 to be in a working state or a non-working state; and a display, optionally, the display being one or more of an LED lamp, a liquid crystal display screen, and a horn. In this embodiment, the navigation apparatus 130 includes a battery pack mounting portion, configured to mount an external battery pack. The battery pack mounting portion includes a connecting structure, configured to connect the battery pack with a first navigation apparatus, and the connecting structure may be a guide rail, a grove, or the like. The battery pack mounting portion further includes a locking structure, configured to lock the external battery pack to the navigation apparatus 130, and the locking structure may be a clip, a clamshell, or the like. In other embodiments, the navigation apparatus 130 includes an independent battery pack, and the independent battery pack is mounted inside the housing. In this embodiment, the navigation apparatus 130 further includes a device mounting portion, configured to mount the navigation apparatus 130 onto a self-moving device. The device mounting portion includes a connecting structure, configured to connect the navigation apparatus 130 with the self-moving device, and the connecting structure may be a guide rail, a clamping mechanism, or the like. The device mounting portion further includes a locking structure, configured to lock the navigation apparatus 130 onto the self-moving device, and the locking structure may be a clip, a magnet, or the like. The navigation apparatus 130 further includes an interface. When the navigation apparatus 130 is connected with the self-moving device, it is achieved that the interface is electrically connected to the self-moving device, and a form of the interface may be a spring plate, a connector, or the like. The navigation apparatus 130 further includes an operation interface, configured to enter an instruction by a user, to control the navigation apparatus 130 to work, or process data generated by the navigation apparatus 130. Optionally, the operation interface includes a button, a touchscreen, or the like. In other embodiments, the navigation apparatus 130 further includes a control board, and the control board is mounted inside the housing. Functions of the control board include: processing data generated by the first navigation apparatus, outputting a control instruction to the self-moving device, wirelessly communicating with another device, and the like.

In this embodiment, the self-moving device includes: a housing; and a mounting portion, including a connecting structure, configured to mount the navigation apparatus 130 to the self-moving device, and the connecting structure matches the connecting structure of the device mounting portion of the navigation apparatus 130; and the mounting portion further includes a locking structure, configured to lock the navigation apparatus 130 onto the self-moving device, and the locking structure matches the locking structure of the device mounting portion of the navigation apparatus 130. The self-moving device further includes an interface. When the navigation apparatus 130 is connected with the self-moving device, it is achieved that the interface is electrically connected to the navigation apparatus 130, and it is achieved that the interface structurally and electrically matches the interface of the navigation apparatus 130. The self-moving device further includes a display. Preferably, the display is a display screen, configured to output status information of the self-moving device, or working scenario information such as a map or a path of a working area. The self-moving device further includes an operation interface, and the operation interface includes a button, a touchscreen, or the like, configured to enter an instruction by the user. The self-moving device further includes a control board, mounted inside the housing, and configured to: process a signal received by the self-moving device, and generate a control instruction, to control the self-moving device to move and work.

Different self-moving devices may further include different components. For example, an autonomous mower includes a mowing component and a movement component.

In this embodiment, the automatic working system 100 includes at least two types of self-moving devices, and different self-moving devices work in different scenarios. For example, the automatic working system 100 may include an autonomous mower and an autonomous patrol device. The autonomous mower usually performs a lawn-mowing task in daytime, and the autonomous patrol device usually performs a patrol task in nighttime. Therefore, the navigation device can be enabled to work cooperating with the autonomous mower in daytime, and to work cooperating with the autonomous patrol device in nighttime. For another example, the automatic working system 100 may include an autonomous mower, an autonomous leaf collection device and an autonomous snowplow. The autonomous mower mainly performs a lawn-mowing task in spring and summer, the autonomous leaf collection device mainly performs a leaf collection task in autumn, and the autonomous snowplow usually performs a snow-sweeping task in winter. Therefore, in spring and summer, the navigation device is enabled to work cooperating with the autonomous mower; in autumn, the navigation device is enabled to work cooperating with the autonomous leaf collection device; and in winter, the navigation device is enabled to work cooperating with the autonomous snowplow. In this way, the navigation device cooperates with different self-moving devices respectively in different time periods, so that maximum utilization of the navigation device is achieved.

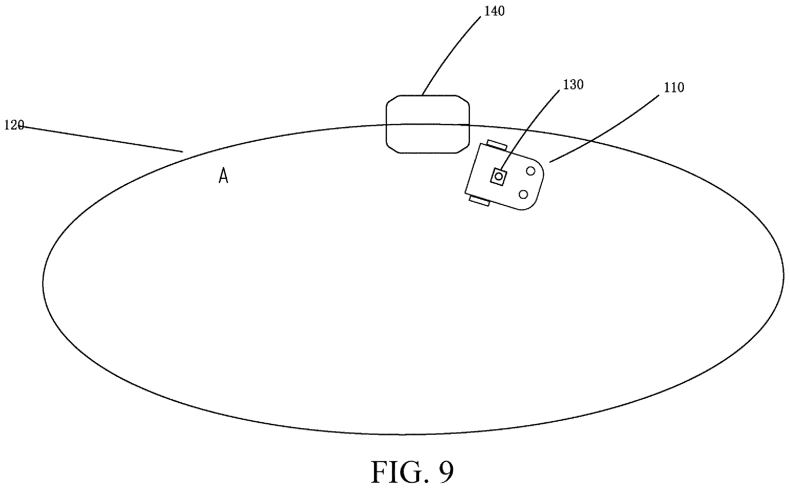

FIG. 9 is a schematic diagram of a working area A of an autonomous mower 3. The following uses movement of the autonomous mower 3 as an example, to describe a process of cooperating between the navigation device and the self-moving device.

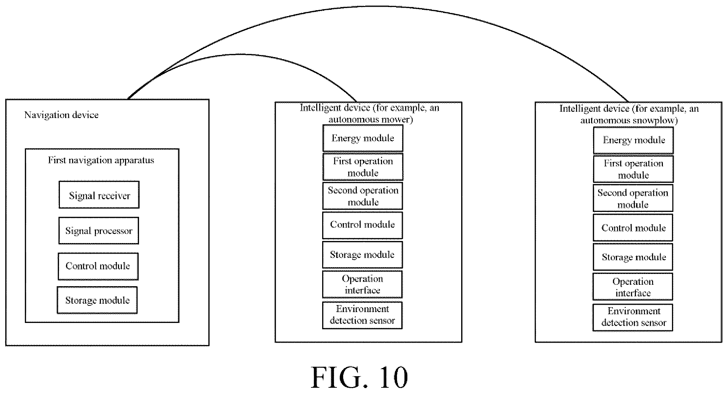

Referring to FIG. 10, in a first embodiment according to the present invention, the navigation apparatus 130 includes at least one satellite signal receiver, configured to receive a satellite location signal. The navigation apparatus 130 further includes a signal processor, configured to calculate a current position coordinate of the navigation apparatus 130 according to the received satellite signal. In this embodiment, the origin of coordinate is set at the position of a stop 7 of the autonomous mower 3. In this embodiment, the navigation apparatus 130 includes a storage module, configured to record a position coordinate of the navigation apparatus 130. During a process in which the navigation apparatus 130 moves along a boundary 9 of the working area A for a circle, the storage module records position coordinates of the navigation apparatus 130, so that a series of position coordinates associated with the boundary 9 of the working area A are obtained. In this embodiment, the autonomous mower 3 includes a first operation module and a second operation module. In the second working mode of the navigation device, the navigation apparatus 130 is electrically connected to the autonomous mower 3, the position coordinates stored in the storage module of the navigation apparatus 130 are transmitted to the first operation module, and the first operation module calculates a closed boundary according to the position coordinates, to generate a map. The second operation module calculates a movement path of the autonomous mower 3 according to the map that is obtained through calculation by the first operation module. A control module of the autonomous mower 3 controls the autonomous mower 3 to move along the movement path that is obtained through calculation by the second operation module.

In this embodiment, in the first working mode of the navigation device, the navigation apparatus 130 is supplied with power by an external energy module, and after the navigation apparatus 130 is connected with the autonomous mower 3, the navigation apparatus 130 is supplied with power by an energy module of the autonomous mower 3 for working. Specifically, the energy module of the autonomous mower 3 is detachable. In the first working mode of the navigation device, the energy module of the autonomous mower 3 is used as the external energy module of the navigation apparatus 130. Specifically, the energy module is a battery pack. That the battery pack is shared by the navigation apparatus 130 and the self-moving device may reduce costs.

After the navigation apparatus 130 is connected with the autonomous mower 3, the navigation device provides location information for movement of the autonomous mower 3. Specifically, the navigation apparatus 130 outputs a position coordinate of the autonomous mower 3, and a control module of the autonomous mower 3 determines whether the position coordinate of the autonomous mower 3 satisfies a preset path. If the position coordinate of the autonomous mower 3 does not satisfy the preset path, a movement manner of the autonomous mower 3 is adjusted.

In this embodiment, the autonomous mower 3 includes an operation interface, and the operation interface includes a display unit, configured to display a virtual map corresponding to the map that is obtained through calculation by the first operation module. The user can operate on the operation interface, and correct the virtual map. Correction information is fed back to the first operation module after confirmed by the user, and the first operation module corrects the map according to the correction information of the virtual map.

In this embodiment, the autonomous mower 3 includes at least one environment detection sensor, for example, an obstacle detection sensor, configured to detect an obstacle on a movement path of the autonomous mower 3. The control module of the autonomous mower 3 feeds back environment information detected by the environment detection sensor to the first operation module and the second operation module. The first operation module updates the map according to the environment information, and the second operation module adjusts the movement path according to the environment information.

Similarly, in the first working mode of the navigation device, the navigation apparatus 130 moves along a boundary of a working area of an autonomous snowplow 5 for a circle, and the storage module of the navigation apparatus 130 records position coordinates of the navigation apparatus 130, thereby obtaining a series of position coordinates associated with the boundary of a working area B. After the navigation apparatus 130 is connected with the autonomous snowplow 5, the position coordinates stored in the storage module of the navigation apparatus 130 are transmitted to the first operation module of the autonomous snowplow 5, and the first operation module calculates a closed boundary according to the position coordinates, to generate a map. The second operation module of the autonomous snowplow 5 calculates a movement path of the autonomous snowplow 5 according to the map that is obtained through calculation by the first operation module. A control module of the autonomous snowplow 5 controls the autonomous snowplow 5 to move along the movement path that is obtained through calculation by the second operation module. The navigation device provides location information for movement of the autonomous snowplow 5, the navigation apparatus 130 outputs a position coordinate of the autonomous snowplow 5 to the control module of the autonomous snowplow 5, and the control module of the autonomous snowplow 5 determines whether the position coordinate of the autonomous snowplow 5 satisfies a preset path. If the position coordinate of the autonomous snowplow 5 does not satisfy the preset path, a movement manner of the autonomous snowplow 5 is adjusted.

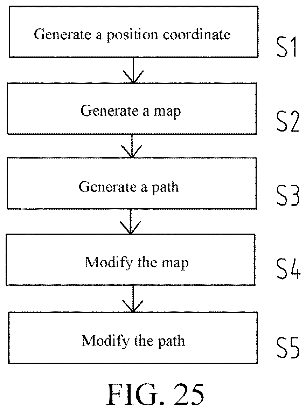

For a process of cooperating between the navigation device and the self-moving device, refer to FIG. 25.

In this embodiment, the navigation device can cooperate with different self-moving devices. Specifically, the navigation apparatus 130 can be connected with different self-moving devices, and provide boundary information of a working area and location information for different self-moving devices. In this embodiment, the navigation apparatus 130 includes a first interface, configured to connect with the self-moving device. A second interface is reserved on the self-moving device, configured to connect with the navigation apparatus 130. The first interface matches the second interface, and the first interface and the second interface have corresponding terminals. In this embodiment, the first interface and the second interface each include at least one communication terminal, configured to implement communication between the navigation apparatus 130 and the self-moving device.

Specifically, the communications terminal includes a first functional terminal, configured to detect whether the navigation apparatus 130 is connected with the self-moving device. A detection method for detecting whether the navigation apparatus 130 is connected with the self-moving device includes multiple types. In an embodiment, after the self-moving device is enabled, the first functional terminal of the self-moving device sends a detection signal at a particular frequency, and if the first interface is successfully connected with the second interface, the first functional terminal of the self-moving device receives a feedback signal, and the navigation apparatus 130 is determined to be connected with the self-moving device. In another embodiment, after the self-moving device is enabled, an electrical parameter of the first functional terminal of the self-moving device is detected, for example, a voltage or current value, and if the electrical parameter reaches a preset value, the navigation apparatus 130 is determined to be connected with the self-moving device. It should be understood that the determining that the navigation apparatus 130 is connected with the self-moving device may cause in the self-moving device, or may cause in the navigation apparatus 130.

The communication terminal further includes a second functional terminal, configured to detect whether the navigation apparatus 130 is in a normal working state. After connected with the navigation apparatus 130, the self-moving device sends a detection signal by using the second functional terminal of the self-moving device. If the navigation apparatus 130 is in a normal working state, the navigation apparatus 130 sends a feedback signal by using the second functional terminal of the navigation apparatus 130, and the self-moving device receives the feedback signal satisfying a preset condition, and determines that the navigation apparatus 130 is in a normal working state.

The communications terminal further includes a third functional terminal, configured to identify the self-moving device. The third functional terminal is referred to as an identity terminal. The navigation apparatus 130 identifies the self-moving device by using the identity terminal, thereby being capable of transmitting position coordinates corresponding to a boundary of a working area to the self-moving device. Specifically, the identity terminal of the self-moving device is connected to different voltage divider resisters according to different working areas of the self-moving device, and the navigation apparatus 130 determines a working area of the connected self-moving device by using different voltage divisions of the identity terminal. Certainly, another method may alternatively be adopted to set an identity mark for the self-moving device. In this embodiment, the navigation apparatus 130 includes an operation interface. In the first working mode of the navigation device, the user controls the navigation apparatus 130 to move along a boundary of each of the different working areas for a circle, and enters a mark corresponding to each of the different working areas, and the mark matches an identity mark of the self-moving device moved in the working area. After the navigation apparatus 130 is connected with the self-moving device, the navigation apparatus 130 reads the identity mark of the self-moving device, and transmits boundary information of the working area matching the identity mark to the self-moving device according to the identity mark of the self-moving device.

In other embodiments, when the navigation apparatus 130 is connected with the self-moving device, another method may alternatively be adopted to enable the self-moving device to obtain the boundary information corresponding to the working area. For example, different identifiers are set in the navigation apparatus 130 for boundary information of the different working areas, and identifiers corresponding to the working areas are preset in the self-moving device. When the navigation apparatus 130 is connected with the self-moving device, the control module of the self-moving device searches for boundary information of a working area matching the self-moving device by comparing identifiers. Alternatively, when the navigation apparatus 130 is connected with a self-moving device, the navigation apparatus 130 calculates a current position coordinate of the self-moving device, and determines a working area in which the self-moving device is located, thereby transmitting boundary information of a corresponding working area to the self-moving device.

In this embodiment, the communication terminal further includes a fourth functional terminal. After the navigation apparatus 130 identifies the self-moving device, the boundary information of the working area corresponding to the self-moving device is sent to the self-moving device through the fourth functional terminal. In this embodiment, the fourth functional terminal of the navigation apparatus 130 sends a series of position coordinates, and the fourth functional terminal of the self-moving device receives the position coordinates sent by the navigation apparatus 130.

The communication terminal further includes a fifth functional terminal, configured to provide location information for the self-moving device. After the navigation apparatus 130 is connected with the self-moving device, the navigation apparatus 130 calculates a current position coordinate of the self-moving device, and sends the current position coordinate of the self-moving device to the self-moving device through the fifth functional terminal, and the control module of the self-moving device obtains an initial position of the self-moving device, and controls the self-moving device to move and work in the working area with respect to a preset movement path. In the process in which the navigation apparatus 130 moves with the self-moving device, the navigation apparatus 130 calculates in real time the position coordinate of the self-moving device, and sends the position coordinate of the self-moving device to the self-moving device through the fifth functional terminal, the self-moving device receives the position coordinate through the fifth functional terminal, and the control module adjusts a movement manner of the self-moving device according to the position coordinate of the self-moving device.

In this embodiment, the control module of the navigation apparatus 130 controls sending and receiving of signals at the first interface, and the control module of the self-moving device controls sending and receiving of signals at the second interface.

In this embodiment, the first interface and the second interface each include a power terminal. When the navigation apparatus 130 is connected with the self-moving device, a power supply module of the self-moving device supplies electric energy for working of the navigation apparatus 130 through the power terminal of the first interface and that of the second interface.

In this embodiment, different self-moving devices each include a second interface, the second interfaces each include terminals for implementing corresponding functions, the terminals are consistently arranged, and it is achieved that the terminals matches the first interface of the navigation apparatus 130 on structure and function. In this embodiment, different self-moving devices include second interfaces that are completely the same, that is, terminals of the second interface of each of the different self-moving devices are completely the same. In other embodiments, the second interface of each of the different self-moving devices may include different additional functional terminals, or may include idle terminals, provided that it is ensured that terminals of the second interface matches terminals of the first interface, to implement cooperating between the navigation device and the self-moving device.

In this embodiment, the navigation apparatus 130 includes a first connection portion, the self-moving device includes a second connection portion, and the first connection portion is detachably connected to the second connection portion. The first connection portion can be quickly connected to or disassembled from the second connection portion in multiple manners. In an embodiment, the first connection portion is quickly connected to or disassembled from the second connection portion in a sliding manner. In another embodiment, the first connection portion is quickly connected to or disassembled from the second connection portion in a clipping manner. In this embodiment, the first interface is provided on the first connection portion, the second interface is provided on the second connection portion, and when the first connection portion is connected to the second connection portion, the first interface is connected with the second interface, and the navigation apparatus 130 is electrically connected to the self-moving device. The second connection portion may be provided at any position on the self-moving device, and the self-moving device reserves a connecting space for the navigation apparatus 130. In an embodiment, the second connection portion is provided on an upper side of the self-moving device, so that when connected with the self-moving device, the navigation apparatus 130 can well receive a satellite signal. In addition, to prevent the navigation apparatus 130 from being damaged due to rain or the like, the navigation apparatus 130 includes a waterproof structure. Specifically, the navigation apparatus 130 is internally glued. In another embodiment, the second connection portion is provided on a lower side of the self-moving device, and the navigation apparatus 130 can be built into a housing of the self-moving device, so that the navigation apparatus 130 is prevented from being damaged. In addition, to enable the navigation apparatus 130 to be capable of better receiving a satellite signal, the satellite signal receiver of the navigation apparatus 130 and the navigation apparatus 130 are separately provided. Preferably, the satellite signal receiver of the navigation apparatus 130 is provided on the top of the self-moving device, and the satellite signal receiver of the navigation apparatus 130 can implement wireless communication or wired communication with the signal processor.

In this embodiment, the second connection portion is a connection base, and can accommodate at least a part of the navigation apparatus 130, facilitating a connection between the navigation apparatus 130 and the self-moving device.

In this embodiment, the navigation apparatus 130 and the self-moving device can implement a hot swap.

In this embodiment, the navigation device is a DGPS apparatus, the navigation device includes the foregoing fixedly set base station 140, and position information of the base station 140 is known. The base station includes a satellite signal receiver, the base station is in wireless communication with the navigation apparatus 130, and the base station can obtain a location error of a location signal according to location information and the known position information, and correct the location information of the navigation apparatus 130, so that the navigation apparatus 130 outputs a more precise position coordinate. The base station is further configured to be a charging station of a moving device and the navigation device.

The present invention further provides a method for docking the self-moving device with the base station 140 (or another docking apparatus).

The self-moving device (which may also be referred to as an automatic moving device) usually moves in a prescribed area, the prescribed area is provided with a docking apparatus, the docking apparatus may be a charging station (that is, the base station 140) or the like, and when having insufficient quantity of electricity, the self-moving device may return the docking apparatus for charging, to proceed to cycle work. However, the self-moving device usually can return the docking apparatus only along a boundary, and if a relatively distant side of the boundary is used by the self-moving device to return, a return time is relatively long and energy is wasted.

For convenience of return, in this embodiment, the docking apparatus is provided with a transmit module that can transmit a signal wave to limit a docking area when the self-moving device is docked with the docking apparatus. The transmit module may be an ultrasonic wave transmit module or the like. Due to that transmitted ultrasonic wave has a relatively short distance, an area covered by the ultrasonic wave is a docking area. The self-moving device can identify the docking area according to the ultrasonic wave, and then identify the docking apparatus.

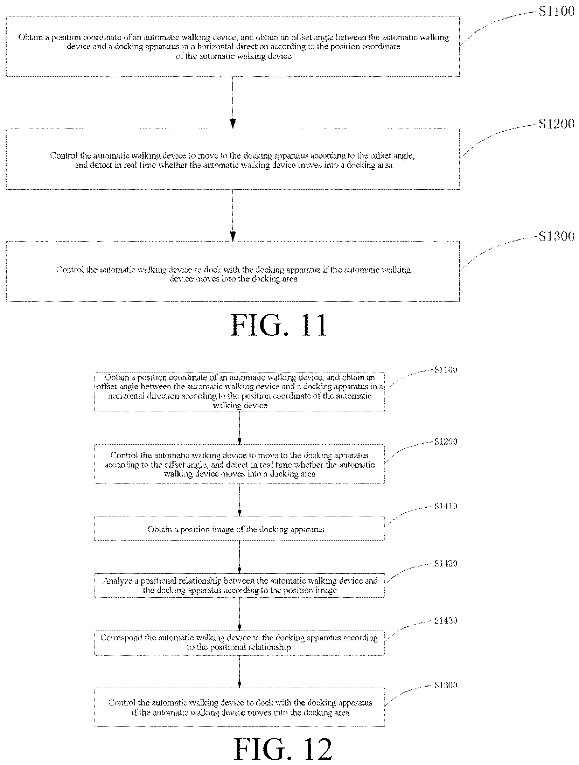

For convenience of return for docking, as shown in FIG. 11, a docking method for a self-moving device according to an embodiment includes step S1100 to step S1300.

Step S1100: Obtain a position coordinate of the self-moving device, and obtain an offset angle between the self-moving device and a docking apparatus in a horizontal direction according to the position coordinate of the self-moving device.

In this step, the self-moving device can obtain in real time the position coordinate of the self-moving device during moving, and can calculate the offset angle between the self-moving device and the docking apparatus in the horizontal direction according to the position coordinate of the self-moving device. Specifically, an angle formed by a connection line between the position coordinate of the self-moving device and the position coordinate of the docking apparatus and the horizontal direction can be calculated according to an anti-tangent trigonometric function, that is, an offset angle between the self-moving device and the docking apparatus in the horizontal direction.

Step S1200: Control the self-moving device to move to the docking apparatus according to the offset angle, and detect in real time whether the self-moving device moves into a docking area.

In this step, when moving to the docking apparatus according to the offset angle, the self-moving device may encounter an obstacle such as a tree or a bunker, which needs to be avoided in time. To this end, when the self-moving device is controlled to move to the docking apparatus according to the offset angle, if the self-moving device identifies an obstacle, the self-moving device can be controlled to shift by a preset angle in the horizontal direction to avoid the obstacle for moving. A value of the preset angle is relatively small, and is usually far less than the offset angle. In this way, the self-moving device is prevented from seriously deviating from a route during walking. However, if the self-moving device encounters obstacles for multiple times when moving, the self-moving device needs to shift for multiple times, probably causing serious deviation from the route. To this end, in this embodiment, when a quantity of times for which the self-moving device identifies obstacles reaches a preset quantity or when an absolute value of a difference between an angle between the self-moving device and the horizontal direction and the offset angle is greater than a preset difference value, a position coordinate of the self-moving device is re-obtained and an offset angle between the self-moving device and the docking apparatus in the horizontal direction is re-obtained according to the position coordinate of the self-moving device through step S1100.

Step S1300: Control the self-moving device to dock with the docking apparatus if the self-moving device moves into the docking area.

In this step, when the self-moving device can receive a signal wave transmitted by the transmit module, it indicates that the self-moving device already moves into the docking area. When the signal wave such as an ultrasonic signal is lost, the self-moving device can rotate in place and search for the signal wave, and move to the docking apparatus in a direction from which intensity of the signal wave gradually enhances. After moved to the docking apparatus, the self-moving device can adjust an attitude of itself to dock with the docking apparatus for charging or completing other actions or the like. According to the foregoing docking method for the automatic moving device, the automatic moving device can be directly moved to the docking apparatus when being docked with the docking apparatus, to avoid a conventional case in which the automatic moving device can return the docking apparatus only along a boundary, thereby reducing a return time and saving resources.

As shown in FIG. 12, a docking method in another embodiment further includes step S1410 to step S1430.

Step S1410: Obtain a position image of the docking apparatus. After moving into a docking area, the self-moving device can obtain position image information of the docking apparatus, to determine a specific position of the docking apparatus.

Step S1420: Analyze a positional relationship between the self-moving device and the docking apparatus according to the position image. The self-moving device can analyze the positional relationship between the self-moving device and the docking apparatus according to the obtained position image. For example, the self-moving device may be on the right side, the left side, or in the middle of the docking apparatus.

Step S1430: Correspond the self-moving device to the docking apparatus according to the positional relationship. The self-moving device can adjust a position of itself according to the positional relationship, and correspond the position of itself to that of the docking apparatus, to facilitate further docking.

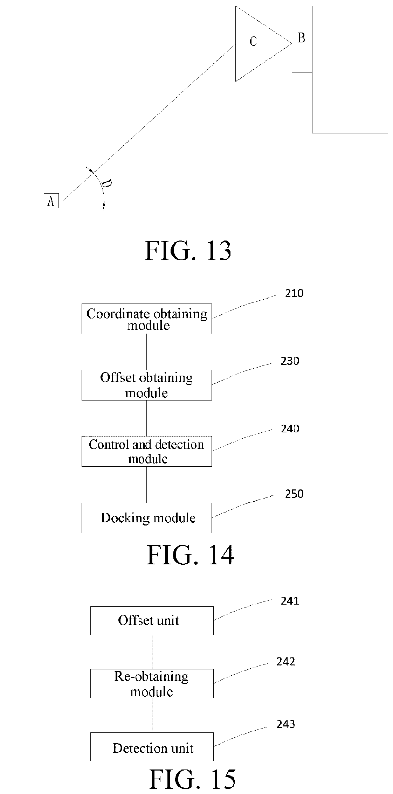

As shown in FIG. 13, a self-moving device A may obtain a position coordinate PI (xl, y1) of a docking apparatus B. When returning to dock with the docking apparatus B from a particular position shown in the figure, the self-moving device may obtain an angle D between the self-moving device and PI in the horizontal direction according to a position coordinate P2 (x2, y2) of the self-moving device, wherein D=arct (y2-y1)/(x2-x1). The self-moving device can move along the angle D to the docking apparatus B, until the self-moving device moves into a docking area C. After the self-moving device moves into the docking area C, a positional relationship between the self-moving device and the docking apparatus may be adjusted, to dock the self-moving device with the docking apparatus for charging or completing other operations.

This embodiment further provides a self-moving device, the self-moving device moves in a prescribed area, the prescribed area is provided with a docking apparatus, the docking apparatus is provided with a transmit module that can transmit a signal wave to limit a docking area when the self-moving device is docked with the docking apparatus. As shown in FIG. 14, the self-moving device includes a coordinate obtaining module 210, an offset obtaining module 230, a control and detection module 240 and a docking module 250.

The coordinate obtaining module 210 is configured to obtain a position coordinate of the docking apparatus and a position coordinate of the self-moving device. In this embodiment, the coordinate obtaining module 210 may be a GPS or BeiDou navigation location module. When the self-moving device is docked with the docking apparatus, the coordinate obtaining module 210 can locate a coordinate position of the docking apparatus. At the same time, the coordinate obtaining module 210 may obtain in real time a coordinate position of the self-moving device.

The offset obtaining module 230 is configured to obtain an offset angle between the self-moving device and the docking apparatus in the horizontal direction according to the position coordinate of the docking apparatus and the position coordinate of the self-moving device. The self-moving device can obtain in real time the position coordinate of itself by using the coordinate obtaining module 210 during moving, and can calculate the offset angle between the self-moving device and the docking apparatus in the horizontal direction according to the position coordinate of itself. Specifically, an angle formed by a connection line between the position coordinate of the self-moving device and the position coordinate of the docking apparatus and the horizontal direction can be calculated according to an anti-tangent trigonometric function, that is, an offset angle between the self-moving device and the docking apparatus in the horizontal direction. The offset obtaining module 230 may be an electronic compass or the like.

The control and detection module 240 is configured to control the self-moving device to move to the docking apparatus according to the offset angle, and detect in real time whether the self-moving device moves into the docking area. When moving to the docking apparatus according to the offset angle, the self-moving device may encounter an obstacle such as a tree or a bunker, which needs to be avoided in time. To this end, when the self-moving device is controlled to move to the docking apparatus according to the offset angle, if the self-moving device identifies an obstacle, the self-moving device can be controlled to shift by a preset angle in the horizontal direction to avoid the obstacle for moving. A value of the preset angle is relatively small, and is usually far less than the offset angle. In this way, the self-moving device is prevented from seriously deviating a route during walking. However, if the self-moving device encounters obstacles for multiple times when moving, the self-moving device needs to shift for multiple times, probably causing serious deviation from the route. To this end, when a quantity of times for which the self-moving device identifies obstacles reaches a preset quantity or when an absolute value of a difference between an angle between the self-moving device and the horizontal direction and the offset angle is greater than a preset difference value, a position coordinate of the self-moving device may be re-obtained and an offset angle between the self-moving device and the docking apparatus in the horizontal direction may be re-obtained according to the position coordinate of the self-moving device. Specifically, as shown in FIG. 15, the control and detection module 240 includes an offset unit 241, a re-obtaining unit 242 and a detection unit 243. The offset unit 241 is configured to: when the self-moving device is controlled to move to the docking apparatus according to the offset angle, if the self-moving device identifies an obstacle, control the self-moving device to shift by a preset angle in the horizontal direction to avoid the obstacle for moving. The re-obtaining unit 242 is configured to: when a quantity of times for which the self-moving device identifies obstacles reaches a predetermined quantity or an absolute value of a difference between an angle between the self-moving device and the horizontal direction and the offset angle is greater than a preset difference, re-obtain a position coordinate of the self-moving device and re-obtain the offset angle between the self-moving device and the docking apparatus in a horizontal direction according to the position coordinate of the self-moving device. The detection unit 243 is configured to detect in real time whether the self-moving device moves into the docking area.

The docking module 250 is configured to control the self-moving device to dock with the docking apparatus when the self-moving device moves into the docking area. When the self-moving device can receive a signal wave transmitted by the transmit module, it indicates that the self-moving device already moves into the docking area. When signal wave such as an ultrasonic signal is lost, the self-moving device may rotate in place to search for the signal wave. After moved to the docking apparatus, the self-moving device can adjust an attitude of itself to dock with the docking apparatus for charging or completing other actions or the like.

The self-moving device can be directly moved to the docking apparatus when the self-moving device is docked with the docking apparatus, avoiding a common case in which the self-moving device can return the docking apparatus only along a boundary, thereby reducing a return time and saving resources.

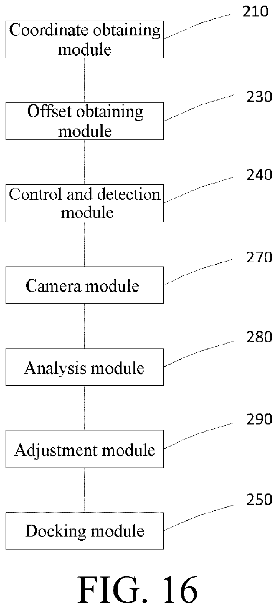

As shown in FIG. 16, a self-moving device in another embodiment further includes a camera module 270, an analysis module 280 and an adjustment module 290.

The camera module 270 is configured to obtain a position image of the docking apparatus. After moving into a docking area, the self-moving device can obtain position image information of the docking apparatus, to determine a specific position of the docking apparatus.

The analysis module 280 is configured to analyze a positional relationship between the self-moving device and the docking apparatus according to the position image. The self-moving device can analyze the positional relationship between the self-moving device and the docking apparatus according to the obtained position image. For example, the self-moving device may be on the right side, the left side, or in the middle of the docking apparatus.

The adjustment module 290 is configured to correspond the self-moving device to the docking apparatus according to the positional relationship. The self-moving device can adjust a position of itself according to the positional relationship, and correspond the position of itself to that of the docking apparatus, to facilitate further docking.

As shown in FIG. 13, a self-moving device A may obtain a position coordinate P1 (x1, y1) of a docking apparatus B. When returning to dock with the docking apparatus B from a particular position shown in the figure, the self-moving device may obtain an angle D between the self-moving device and PI in the horizontal direction according to a position coordinate P2 (x2, y2) of the self-moving device, where D=arct (y2-y1)/(x2-x1). The self-moving device can move along the angle D to the docking apparatus B, until the self-moving device moves into a docking area C. After the self-moving device moves into the docking apparatus, a positional relationship between the self-moving device and the docking apparatus may be adjusted, to dock the self-moving device with the docking apparatus for charging or completing other operations.

In another embodiment, the navigation device may alternatively be a GPS apparatus, and no additional base station is needed.

In this embodiment, the navigation device can cooperate with different self-moving devices, to provide boundary information and location information for different self-moving devices. A cooperating manner between the navigation device and the self-moving device is convenient, so that the navigation device can be universal in different self-moving devices. Because the navigation device can be universal in different self-moving devices, costs of configuring navigation devices by a user for multiple self-moving devices are significantly reduced.

In this embodiment, the navigation device can work normally only when cooperating with the self-moving device authorized by the user. An account is set for the navigation device, account information is stored in a cloud, and the user views or modifies the account information through an intelligent terminal. The account information includes information about the self-moving device authorized by the user, and information about possible working areas of the navigation device, including environment information about the working areas. When the navigation apparatus 130 is connected with the self-moving device, matching is first performed. In an embodiment, a license code is preset for the authorized self-moving device. When the navigation apparatus 130 is connected with the self-moving device, the navigation apparatus 130 detects the license code of the self-moving device. If the license code can be identified by the navigation apparatus 130, it is determined that the self-moving device is the authorized self-moving device, and the navigation apparatus 130 matches self-moving device. In another embodiment, identity authentication information about the self-moving device is added to the account of the navigation device. The identity authentication information about the self-moving device may be a factory-preset verification code of the self-moving device, or an authentication chip configured later for the self-moving device. When the navigation apparatus 130 is connected with the self-moving device, the navigation apparatus 130 detects identity authentication information from the self-moving device, and compares the identity authentication information with identity authentication information authorized in the account. If identity authentication information that can be matched is found in the account, it is determined that the self-moving device is a self-moving device authorized by the user, and the navigation apparatus 130 matches the self-moving device. In another embodiment, before the navigation apparatus 130 matches the self-moving device, the user needs to enter a verification code through an operation interface for the self-moving device. Specifically, the verification code is a license code of the navigation device. If the user enters a correct verification code, the navigation apparatus 130 can match the self-moving device. In another embodiment, before the navigation apparatus 130 matches the self-moving device, the user needs to enter identity authentication information about the self-moving device for the navigation apparatus 130, and it may be required that the identity authentication information is already stored into the account of the navigation device. In another embodiment, before a first navigation apparatus matches the self-moving device, the user enters identity authentication information about the user, and the identity authentication information may be associated with an account name or password of the account. If the user enters correct identity authentication information, the navigation apparatus 130 allows the user to match the navigation apparatus 130 with the self-moving device specified by the user. Certainly, the self-moving device may alternatively select to match only an authorized navigation device. First, the self-moving device detects whether the navigation device is a device that can be matched, for example, whether an electrical parameter is matched. Alternatively, an account may be set for the self-moving device, and the account plays a similar role to the account of the navigation device. The method in which the self-moving device determines whether the navigation device is authorized is similar to the method in which the navigation device determines whether the self-moving device is authorized. When the navigation device is connected with the self-moving device, the navigation device may detect only whether the self-moving device is authorized, or may detect whether the navigation device itself is authorized by the self-moving device. Certainly, the user may control the navigation device not to match any device through the account of the navigation device. That is, the navigation device may be set as in a locking mode.

After the navigation apparatus 130 matches the self-moving device, the navigation apparatus 130 can cooperate with the self-moving device for working, including that the navigation apparatus 130 can output boundary information of a working area to the self-moving device, or provide real-time location information for the self-moving device.

In this embodiment, for convenience of operation by the user, after the navigation apparatus 130 successfully matches the self-moving device for the first time, when the navigation apparatus 130 is removed from the self-moving device, authorization information of the self-moving device is reserved, eliminating a need for the user to enter a verification code each time. That is, when the navigation apparatus 130 successfully matches the self-moving device for the first time, a procedure of matching can be eliminated later, thereby implementing a hot swap. When an authorized self-moving device is resold or no longer used, the user may remove preset authorization information in the self-moving device, or, delete related information about the self-moving device from the account of the navigation device, or, delete a verification code automatically stored in the self-moving device. If the navigation apparatus 130 is connected with the self-moving device again, the procedure of matching needs to be performed again.

The user can control various functions of the navigation device through the account of the navigation device on an operation interface, and can disable some functions of the navigation device, for example, a wireless communication function. In addition, power supply to the navigation device can be cut off, and the navigation device can be caused not to enter a normal working state, and so on. In this way, this enables remote control of the navigation device, and is benefit to preventing the navigation apparatus 130 from being stolen.

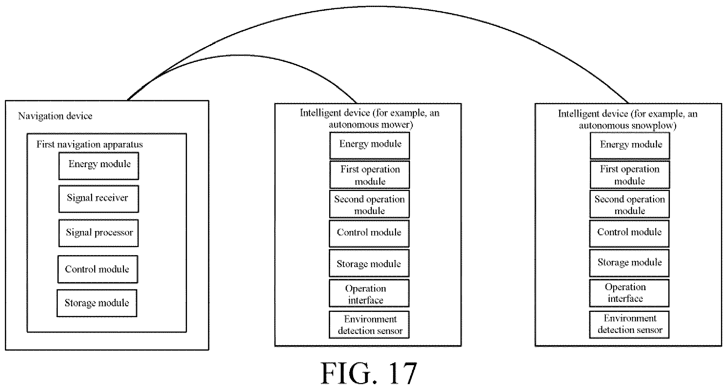

Referring to FIG. 17, in another embodiment of the present invention, a process of cooperating between the navigation device and the self-moving device is basically the same as that in the first embodiment. The difference is that the navigation apparatus 130 includes an energy module. In the first working mode of the navigation device, the energy module supplies power to the navigation apparatus 130. After the navigation apparatus 130 is connected with the self-moving device, the energy module of the navigation apparatus 130 does not supply power, and an energy module of the self-moving device is used to supply power to the navigation apparatus 130 for working. The navigation apparatus 130 includes an independent energy module, so that when a first navigation apparatus is not connected to the self-moving device, or when the self-moving device is powered off, the navigation apparatus 130 can still work, and can play a role in preventing being stolen.

To prevent the navigation apparatus 130 from being stolen, a program may be set in the navigation apparatus 130, so that the navigation apparatus 130 sends an alarm signal after detecting that the navigation apparatus 130 is far away from a working area. Specifically, the navigation apparatus 130 may send the alarm signal to a user terminal by using a wireless communications module. Due to a location function of the navigation apparatus 130, the navigation apparatus 130 can easily determine whether the navigation apparatus 130 is far away from the working area. The navigation apparatus 130 does not work after determining that the navigation apparatus 130 is far away from the working area. Specifically, the navigation apparatus 130 cannot implement a function of outputting a position coordinate of the navigation apparatus 130. To prevent the navigation apparatus 130 from being stolen, a password is set for the navigation apparatus 130. In one embodiment, before the navigation apparatus 130 works, the user needs to enter authentication information, and the authentication information includes a password, a fingerprint, or other identity authentication information. In another embodiment, password matching needs to be achieved if the navigation apparatus 130 cooperates with the self-moving device for working. Specifically, a password is preset in the navigation apparatus 130 and the self-moving device. When the navigation apparatus 130 is connected with the self-moving device, the navigation apparatus 130 verifies a password from the self-moving device, and if the password matches the known password, it is determined that the self-moving device is a device authorized by the user, and the navigation apparatus 130 can cooperate with the self-moving device for working. To prevent the first navigation apparatus from being stolen, locking structures of the navigation apparatus 130 and the self-moving device can be unlocked only when an authentication action is performed by the user. Specifically, the locking structures of the navigation apparatus 130 and the self-moving device includes a security key. After the navigation apparatus 130 is locked to the self-moving device, the security key is taken away, and when the navigation apparatus 130 is detached from the self-moving device, the security key is needed to unlock the locking mechanism. A person who is not authorized by the user cannot detach the navigation apparatus 130 from the self-moving device. Alternatively, the locking structures of the navigation apparatus 130 and the self-moving device include a password lock, and when the navigation apparatus 130 is detached from the self-moving device, a correct password needs to be entered.

In this embodiment, the communications terminal of each of the first interface and the second interface includes a sixth functional terminal, configured to identify a type of the energy module of the self-moving device. Specifically, the energy module of the self-moving device includes a battery pack. Different battery packs output different voltages or currents. The navigation apparatus 130 identifies a type of the battery pack of the self-moving device through the sixth functional terminal, and determines a voltage or current value output by the battery pack. If the voltage or current value output by the battery pack does not match a working voltage or working current of the navigation apparatus 130, the control module of the self-moving device is invoked, or the control module of the navigation apparatus 130 is used, to process the voltage or current output by the battery pack, so that a parameter of electric energy supplied to the navigation apparatus 130 satisfies a working requirement of the navigation apparatus 130.

In another embodiment of the present invention, a process of cooperating between the navigation device and the self-moving device is basically the same as that in the first embodiment. The difference is that the navigation apparatus 130 includes an energy module. After the first navigation apparatus is connected with the self-moving device, the energy module of the navigation apparatus 130 can supply power to the navigation apparatus 130 and the self-moving device at the same time. Therefore, different self-moving devices do not need to be configured with an energy module respectively. The energy module of the self-moving device usually includes a battery pack. Costs for the battery pack are relatively high. If the navigation apparatus 130 and the battery pack are used as a combination, to cooperate with different self-moving devices for working, costs of an automatic working system including multiple self-moving devices are further reduced.

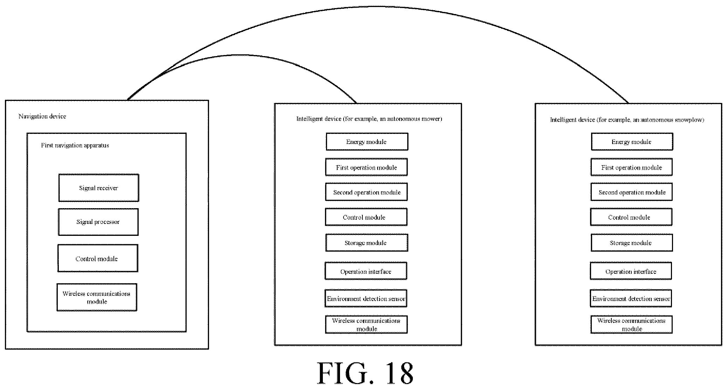

Referring to FIG. 18, in a second embodiment of the present invention, a process of cooperating between the navigation device and the self-moving device is basically the same as that in the first embodiment. The difference is that the navigation apparatus 130 includes a wireless communications module, configured to communicate with a wireless communications module in the self-moving device. In the first working module of the navigation device, the navigation apparatus 130 sends a signal of an position coordinate obtained through calculation by the signal processing unit to the self-moving device through the wireless communications module, and the self-moving device receives the signal of the position coordinate. The self-moving device includes a storage module, configured to store the position coordinate. After the navigation apparatus 130 is controlled by the user to move along a boundary of a working area for a circle, the storage unit stores a series of position coordinates associated with the boundary of the working area. A first operation unit of the self-moving device reads the position coordinates stored in the storage unit, and calculates a closed boundary according to the position coordinates, to generate a map.

In this embodiment, when the wireless communications module of the navigation apparatus 130 matches a wireless communications module of each of different self-moving devices, making the navigation apparatus 130 to move along a boundary of each of the different self-moving device, signals of position coordinates of the navigation apparatus 130 are transmitted to the corresponding self-moving device.

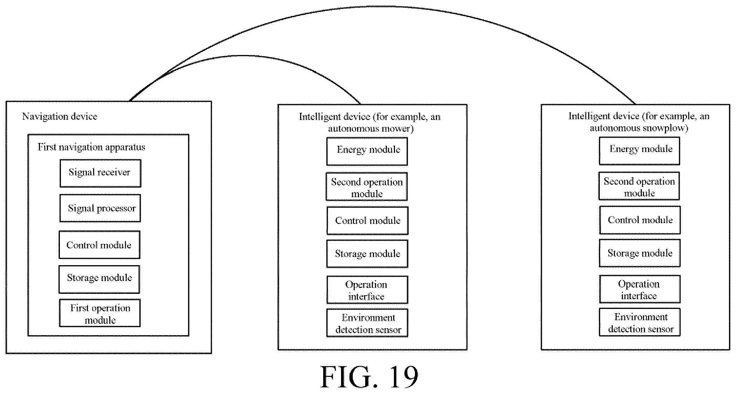

Referring to FIG. 19, in a third embodiment of the present invention, a process of cooperating between the navigation device and the self-moving device is basically the same as that in the first embodiment. The difference is that the navigation apparatus 130 includes a first operation module. In the first working mode of the navigation device, the navigation apparatus 130 first moves along a boundary of a working area A of an autonomous mower 3 for a circle, and the storage module of the navigation apparatus 130 stores a series of position coordinates associated with the boundary of the working area A. The first operation module of the navigation apparatus 130 reads the position coordinates stored in the storage module, and calculates a closed boundary according to the position coordinates, to generate a first map. When the first operation unit obtains the first map through calculation, the storage module cleans the position coordinates associated with the boundary of the working area A. The navigation apparatus 130 then moves along a boundary of a working area B of an autonomous snowplow 5 for a circle, and the storage module of the navigation apparatus 130 stores a series of position coordinates associated with the boundary of the working area B. The first operation module of the navigation apparatus 130 reads the position coordinates stored in the storage module, and calculates a closed boundary according to the position coordinates, to generate a second map. In a second working mode of the navigation device, when being connected with the autonomous mower 3, the navigation apparatus 130 makes the autonomous mower 3 read data of the first map, and when being connected with the autonomous snowplow 5, the navigation apparatus 130 makes the autonomous snowplow 5 read data of the second map. If the navigation apparatus 130 is connected with the autonomous mower 3, a second operation unit of the autonomous mower 3 calculates a movement path of the autonomous mower 3 according to the first map, and a control module of the autonomous mower 3 controls the autonomous mower 3 to move according to the movement path obtained through calculation by the second operation unit. During moving of the autonomous mower 3, the navigation apparatus 130 outputs a current position coordinate of the autonomous mower 3, the control module of the autonomous mower 3 determines whether the current position coordinate of the autonomous mower 3 is consistent with a preset path, and if not consistent, a movement manner of the autonomous mower 3 is adjusted. If the navigation apparatus 130 is connected with the autonomous snowplow 5, a process of cooperating between the navigation device and the autonomous snowplow 5 is similar to that between the navigation device and the autonomous mower 3.

In this embodiment, when the navigation apparatus 130 is connected with the self-moving device, the navigation apparatus 130 identifies the self-moving device through a communications terminal of the first interface, specifically, through an identity terminal. After identifying the self-moving device, the navigation apparatus 130 outputs a map corresponding to a working area of the self-moving device to the self-moving device. In this embodiment, the method in which the map corresponding to the working area is provided for the self-moving device is similar to the method in which the position coordinates of the boundary corresponding to the working area are provided for the self-moving device in the first embodiment. Specifically, after controlling the navigation apparatus 130 to move along the boundary of each of different working areas for a circle, the user enters a mark corresponding to each of the different working areas. The mark matches the self-moving device that moves in the working area, and a map of the working area generated by the navigation apparatus 130 is associated with the mark. After the navigation apparatus 130 is connected with the self-moving device, the navigation apparatus 130 reads the mark of the self-moving device through the identity terminal, determines map data associated with the mark, and outputs the map data associated with the mark to the self-moving device.

In this embodiment, a correction performed on a virtual map by the user through the operation interface of the self-moving device is fed back to the navigation apparatus 130. The first operation module of the navigation apparatus 130 corrects the map according to the correction information, and transmits the corrected map information to the second operation unit of the self-moving device. The second operation unit of the self-moving device re-generates a movement path of the self-moving device according to the corrected map information.

In this embodiment, environment information detected by the environment detection sensor of the self-moving device is fed back to the first operation module of the navigation apparatus 130 or the second operation module of the self-moving device. The first operation module of the navigation apparatus 130 updates the map according to the environment information. The second operation module of the self-moving device updates the movement path according to the environment information.

In this embodiment, the communications terminal of each of the first interface and the second interface further includes a seventh functional terminal, and the navigation apparatus 130 obtains the correction information of the map through the seventh functional terminal. Specifically, after the correction on the virtual map by the user is confirmed, the correction information is sent to the navigation apparatus 130 through the seventh functional terminal of the second interface. The navigation apparatus 130 receives the map correction information through the seventh functional terminal, and the first operation module corrects the map according to the map correction information.

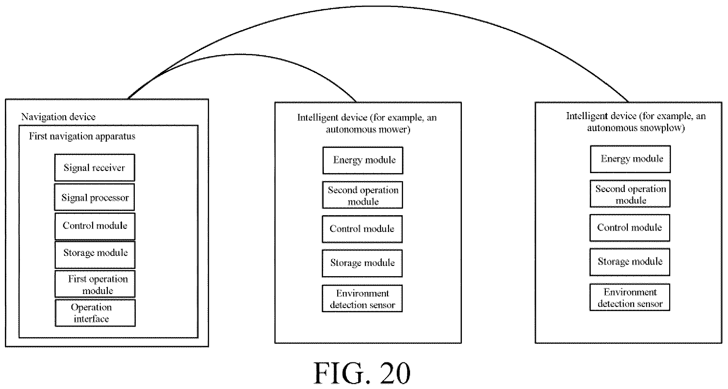

Referring to FIG. 20, in a fourth embodiment of the present invention, a process of cooperating between the navigation device and the self-moving device is basically the same as that in the third embodiment. The difference is that the navigation apparatus 130 includes an operation interface, and the operation interface includes a display unit, configured to display a virtual map corresponding to the map that is obtained through calculation by the first operation module. The user can operate on the operation interface, and correct the virtual map. Correction information is fed back to the first operation module after confirmed by the user, and the first operation module corrects the map according to the correction information of the virtual map.

In the third embodiment and fourth embodiment of the present invention, the navigation apparatus 130 sends the map data of the working area through the fourth functional terminal to the self-moving device, and the self-moving device receives the map data sent by the navigation apparatus 130 through the fourth functional terminal. In the embodiment, the map data is a closed curve fitted according to the position coordinates of the boundary of the working area.

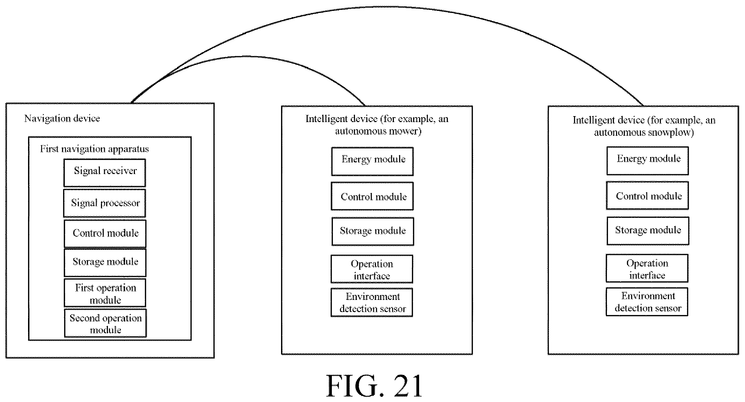

Referring to FIG. 21, in a fifth embodiment of the present invention, a process of cooperating between the navigation device and the self-moving device is basically the same as that in the third embodiment. The difference is that the navigation apparatus 130 includes a second operation module. After the first operation module of the navigation apparatus 130 generates a map according to position coordinates stored in a storage module, the second operation module calculates a movement path of the self-moving device according to the generated map information. After the navigation apparatus 130 is connected with the self-moving device, the control module of the self-moving device reads the movement path information generated by the second operation module of the navigation apparatus 130, and controls the self-moving device to move according to the movement path information.

In this embodiment, when the navigation apparatus 130 is connected with the self-moving device, the navigation apparatus 130 identifies the self-moving device through a communications terminal of the first interface, specifically, through the identity terminal. After identifying the self-moving device, the navigation apparatus 130 outputs the path information corresponding to the working area of the self-moving device to the self-moving device. In this embodiment, the method in which the path information corresponding to the working area is provided for the self-moving device is similar to the method in which the position coordinates of the boundary corresponding to the working area are provided for the self-moving device in the first embodiment. Specifically, after controlling the navigation apparatus 130 to move along the boundary of each of different working areas for a circle, the user enters a mark corresponding to each of the different working areas. The mark matches a preset mark of the self-moving device that moves in the working area, and the path information generated by the navigation apparatus 130 is associated with the mark. After the navigation apparatus 130 is connected with the self-moving device, the navigation apparatus 130 reads the mark of the self-moving device through the identity terminal, determines path information associated with the mark, and outputs the path information associated with the mark to the self-moving device.

In this embodiment, a correction performed on a virtual map by the user through the operation interface of the self-moving device is fed back to the navigation apparatus 130. The first operation module of the navigation apparatus 130 corrects the map according to the correction information, and transmits the corrected map information to the second operation unit. The second operation unit re-generates a movement path of the self-moving device according to the corrected map information.

In this embodiment, environment information detected by the environment detection sensor of the self-moving device is fed back to the first operation module of the navigation apparatus 130 or the second operation module. The first operation module of the navigation apparatus 130 updates the map according to the environment information, and the second operation module updates the movement path according to the environment information.

In this embodiment, the navigation apparatus 130 obtains the correction information of the movement path through the seventh functional terminal. Specifically, the self-moving device sends the environment information detected by the environment detection sensor to the navigation apparatus 130 through the seventh functional terminal. The navigation apparatus 130 receives the environment information through the seventh functional terminal, the first operation module updates the map according to the received environment information, and the second operation module updates the movement path according to the received environment information.

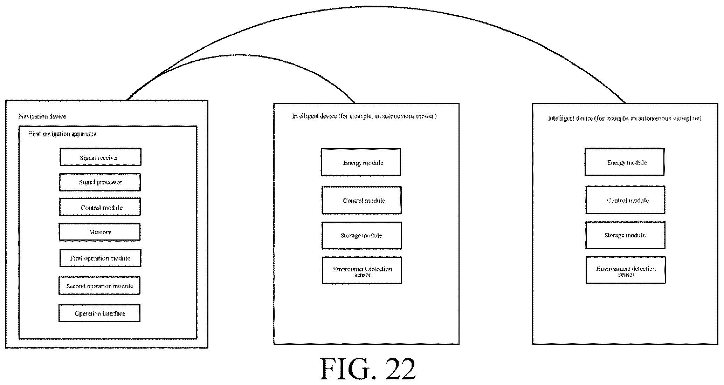

Referring to FIG. 22, in a sixth embodiment of the present invention, a process of cooperating between the navigation device and the self-moving device is basically the same as that in the fifth embodiment. The difference is that the navigation apparatus 130 includes an operation interface, and the operation interface includes a display unit, configured to display a virtual map corresponding to the map that is obtained through calculation by the first operation module. The user can operate on the operation interface, and correct the virtual map. Correction information is fed back to the first operation module after confirmed by the user, and the first operation module corrects the map according to the correction information of the virtual map.

In the fifth embodiment and sixth embodiment of the present invention, the navigation apparatus 130 sends the movement path data of the self-moving device through the fourth functional terminal to the self-moving device, and the self-moving device receives the movement path data sent by the navigation apparatus 130 through the fourth functional terminal.

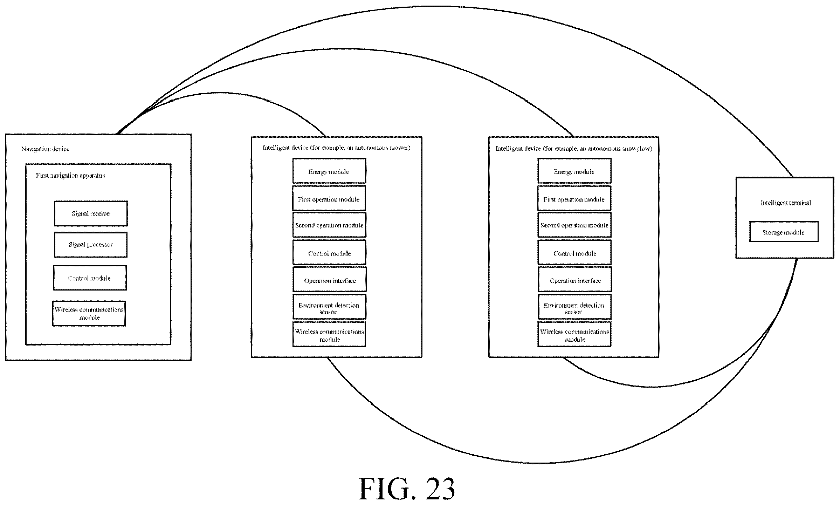

Referring to FIG. 23, in a seventh embodiment of the present invention, a process of cooperating between the navigation device and the self-moving device is basically the same as that in the second embodiment. The difference is that the wireless communications module of the navigation apparatus 130 communicates with an intelligent terminal, and the intelligent terminal communicates with the wireless communications module of the self-moving device. Specifically, in the first working module of the navigation device, the navigation apparatus 130 sends position coordinates calculated by the signal processor to the intelligent terminal through the wireless communications module, and the intelligent terminal receives and stores the position coordinates. After the navigation apparatus 130 is controlled by the user to move along the boundary of the working area for a circle, the intelligent terminal sends the stored position coordinates to the self-moving device that moves in the working area. The first operation module of the self-moving device reads the position coordinates, and calculates a closed boundary according to the position coordinates, to generate a map. The second operation module of the self-moving device calculates a movement path of the self-moving device according to the map calculated by the first operation module. After the navigation apparatus 130 is connected with the self-moving device, the control module of the self-moving device controls the self-moving device to move along the movement path calculated by the second operation module.

Certainly, in another embodiment, the intelligent terminal may alternatively generate a map according to stored position coordinates of a boundary of a working area, and sends the map data to a corresponding self-moving device through the wireless communications module. Alternatively, the intelligent terminal may set a path of a self-moving device according to a generated map of a working area, and sends the path information to a corresponding self-moving device through the wireless communications module. Certainly, the user may directly correct map information on the intelligent terminal by using a display device of the intelligent terminal.

In another embodiment of the present invention, when the navigation apparatus 130 is connected with a self-moving device, the user identifies the self-moving device, and the user selects position coordinates of a boundary of a working area corresponding to the self-moving device, or a map of the working area, or path information. Specifically, the navigation apparatus 130 includes an operation interface. When the navigation apparatus 130 is connected with the self-moving device, the user selects the position coordinates of the boundary of the working area corresponding to the self-moving device, the map of the working area, or the path information, through the operation interface. The fourth functional terminal sends the position coordinates of the boundary of the working area, the map of the working area, or the path information selected by the user to the self-moving device. Specifically, a number or name is set for each of different working areas. The user selects position coordinates of a boundary of a corresponding working area, a map of the working area, or path information by entering the number or the name.

In another embodiment of the present invention, after the navigation apparatus 130 is connected with the self-moving device, the control module of the navigation apparatus 130 may further be used for controlling movement of the self-moving device. The less functions the control module of the self-moving device implements, the lower the costs of the self-moving device. In an automatic working system including multiple self-moving devices, the navigation device can be universal, and therefore that more functions are integrated into the navigation device, and that costs of each self-moving device are reduced can further reduce overall costs of the automatic working system. Certainly, simplifying the function of the navigation device, for example, position coordinates being output only by using the navigation device, makes the navigation device be better universal to some extent, making it relatively easy for implementation of controlling the self-moving device, because only a particular self-moving device needs to be controlled.

In another embodiment of the present invention, a main control board (which includes a CPU) of the self-moving device is integrated into the navigation device, and an external device of the self-moving device such as a display, an operation unit, and a sensor are all integrated into the navigation apparatus 130. A battery pack is also provided in the navigation apparatus 130. The navigation apparatus 130 implements control of the self-moving device, including controlling movement, working, charging management, or the like of the self-moving device. In this way, the navigation device is enabled to integrate as many functions as possible, so that the platform is universal.

In another embodiment of the present invention, the navigation device may access in an Internet of things, and provides information input for an integrated intelligent family. The navigation device may communicate with an intelligent device, communicate with an intelligent terminal of a user, and communicate with a server. The navigation device may implement communication by using a WiFi, a cellular network, or the like. The navigation device may send or receive a status or motion message of the intelligent device, or working environment information, or may receive a weather forecast, or determine micro climate. The navigation device may serve as a platform for message transferring, to establish an intelligent garden system. The navigation device may return information of the intelligent device to the manufacturer, making it convenient for the manufacturer to follow a status of the device, or analyze performance of the device, and providing data support for product development. The navigation device may further capture information of a user, record an operation habit of the user, and enable the device to be adapted to the operation habit of the user, thereby improving operation experience of the user. The navigation device may further analyze the operation habit of the user according to the captured information of the user, and return data to the manufacturer. This helps analysis of a market by the manufacturer, and provides reference to the improvement of a product. When a fault occurs in the intelligent device, the navigation device may provide guidance for the user, to clear the fault. Specifically, the navigation device sends fault information of the device to an after-sales maintenance party. The after-sales maintenance party of the product feeds back a fault code, or a guidance step for clearing the fault according to the fault information. The navigation device receives the feedback information and provides an operation prompt for the user, helping the user quickly clear the fault.

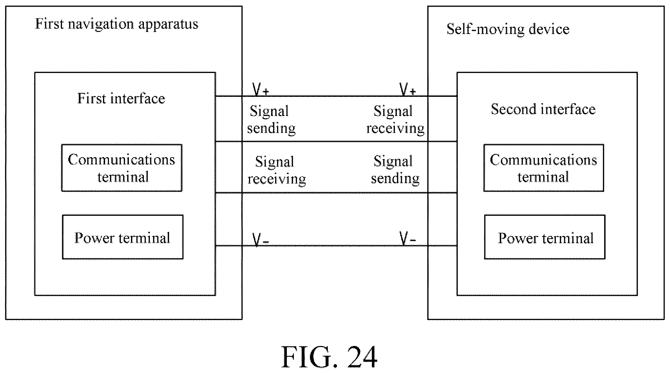

It may be understood that functions of the functional terminals of the communications terminals in the foregoing embodiment may be integrated, or may be separate. The functions of the functional terminals may be integrated in a single terminal. That is, the first interface and the second interface each include one communications terminal. The communications terminal selectively implements other functions except for implementing transmission of position coordinates of a boundary of a working area, a map of the working area, or path information, and a real-time position coordinate of a self-moving device. Certainly, there may be two communications terminals, respectively responsible for sending and receiving of information. Preferably, the communications terminal includes an independent identity terminal. In the foregoing embodiment, there are two power terminals, which respectively indicates a positive electrode and a negative electrode. FIG. 24 is a schematic diagram of a simplified design of the first interface and the second interface.

In the foregoing embodiment, the communications protocol adopted by the first interface and the second interface can be a serial port, a SPI, an IIC, or the like.

In the foregoing embodiment, the wireless communications module may be a WiFi module, a Bluetooth module, a cellular network module, a station module, or the like.

It should be understood that, the various functional modules in the foregoing embodiment such as the first operation module, the second operation module, the display unit, and the like, may be set on the navigation apparatus 130, or may be set on the self-moving device or on an intelligent terminal. The second operation module, the display unit, an environment detection sensor or the like may alternatively be not adopted.

The present invention is not limited to the specific embodiment structure used as an example, and the structure and method based on the concept of the present invention all belongs to the protection scope of the present invention.

## Claims

1. An automatic working system, comprising a moving device and a navigation device, wherein
the automatic working system obtains boundary information of a working area;
the moving device moves and works in the working area;
the navigation device is detachably connected to the moving device; and
the navigation device is configured to receive a location signal to determine position information of the navigation device or the connected moving device.

2. The automatic working system according to claim 1, wherein the navigation device is capable of selectively connecting to at least one of two moving devices.

3. The automatic working system according to claim 2, wherein the moving device is embedded with authorization information matching the navigation device, and the navigation device is capable of determining whether to match the moving device according to the authorization information.

4. The automatic working system according to claim 2, wherein the automatic working system has an operation interface on which authorization information is entered, and the navigation device is configured to match the moving device after correct authorization information is entered.

5. The automatic working system according to claim 3 or 4, wherein the navigation device is capable of storing authorization information of successful matching and performs, when connected to the moving device again, automatic matching based on the authorization information.

6. The automatic working system according to claim 4, wherein the operation interface is configured to enter lock information, and the lock information locks at least some functions of the navigation device.

7. The automatic working system according to claim 1, wherein, when the navigation device is not connected to the moving device, the navigation device moves along a boundary of the working area and obtains, according to the location signal, the boundary information of the working area.

8. The automatic working system according to claim 7, wherein multiple pieces of coordinate data generated according to the location signal by the navigation device defines the boundary information of the working area.

9. The automatic working system according to claim 8, wherein the boundary information is stored in the navigation device or a cloud, and the moving device reads the boundary information when working in the working area.

10. The automatic working system according to claim 9, wherein the moving device comprises a detection and control module, wherein the detection and control module detects whether stored coordinate data overlaps current coordinate data of the moving device, and when the stored coordinate data overlaps the current coordinate data of the moving device, control the moving device to move within the boundary, the current coordinate data of the moving device being generated by the navigation device connecting to the moving device according to the location signal.

11. The automatic working system according to claim 1, wherein the navigation device further comprises a power supply, wherein the power supply supplies power to at least one of the navigation device and the moving device.

12. The automatic working system according to claim 1, wherein the automatic working system comprises a base station of which position information is known, wherein the base station is capable of obtaining a location error of the location signal according to location information and the known position information, and transferring the location error to the navigation device.

13. The automatic working system according to claim 12, wherein the base station is configured to be a charging station of at least one of the moving device and the navigation device.

14. The automatic working system according to claim 1, wherein the automatic working system generates warning information when the moving device moves away from the working area.

15. The automatic working system according to claim 1, wherein the location signal is at least one of a satellite location signal, a base station location signal, a Bluetooth location signal, and a WiFi location signal.

16. A method for controlling an automatic working system, comprising the following steps:
a. obtaining, by the automatic working system, boundary information of a working area; and
b. moving and working, by a moving device in an automatic working system, in the working area, wherein
the automatic working system further comprises a navigation device capable of detachably connecting to the moving device, and the moving device performs location by using the navigation device connecting to the moving device and works in the working area according to location information.

17. The method for controlling an automatic working system according to claim 16, wherein the navigation device autonomously moves along the working area and obtains, according to a location signal, the boundary information.

18. The method for controlling an automatic working system according to claim 17, wherein multiple pieces of coordinate data generated according to the location signal by the navigation device defines the boundary information of the working area.
